# FASCICULE DE BREVET EUROPEEN

(11) **EP 4 206 969 B1**
(45) Date de publication et mention de la délivrance du brevet: **26.02.2025**
(21) Numéro de dépôt: 22216810.6
(22) Date de dépôt: 27.12.2022
(51) Int. Cl.: G06F 21/57, G06F 21/53

(54) **PROCÉDÉ D'ANALYSE DE SÉCURITÉ D'UN FICHIER DE DÉPLOIEMENT D'UNE PLATEFORME D'ORCHESTRATION D'UNE GRAPPE DE SERVEURS, PRODUIT PROGRAMME D'ORDINATEUR ET PLATEFORME D'ORCHESTRATION ASSOCIÉS**
VERFAHREN ZUR SICHERHEITSANALYSE EINER EINSATZDATEI EINER ORCHESTRIERUNGSPLATTFORM EINES SERVERCLUSTERS, COMPUTERPROGRAMMPRODUKT UND ORCHESTRIERUNGSPLATTFORM DAFÜR
METHOD OF SECURITY ANALYSIS OF A DEPLOYMENT FILE OF A SERVER CLUSTER ORCHESTRATION PLATFORM, ASSOCIATED COMPUTER PROGRAM PRODUCT AND ORCHESTRATION PLATFORM

(30) Priorité: 28.12.2021 FR 2114579
(43) Date de publication de la demande: 05.07.2023
(73) Titulaire: THALES, 92400 Courbevoie (FR)
(72) Inventeur: BLAISE, Agathe, 92622 GENNEVILLIERS CEDEX (FR); REBECCHI, Filippo, 92622 GENNEVILLIERS CEDEX (FR)
(74) Mandataire: Lavoix

(56) Documents cités:
- CN-A- 111 737 699
- MUBIN UL HAQUE ET AL: "KGSecConfig: A Knowledge Graph Based Approach for Secured Container Orchestrator Configuration", ARXIV.ORG, CORNELL UNIVERSITY LIBRARY, 201 OLIN LIBRARY CORNELL UNIVERSITY ITHACA, NY 14853, 21 December 2021 (2021-12-21), XP091122710

## Description

La présente invention a pour domaine général celui de l'analyse de sécurité des infrastructures informatiques en nuage. Plus particulièrement, l'invention concerne l'analyse de sécurité des fichiers de déploiement d'applications logicielles microservices.

Il existe différentes manières de développer une application logicielle. Au lieu de réaliser une application monolithique, il peut être avantageux de diviser l'application en une pluralité de services élémentaires, ou microservices, collaborant ensemble.

C'est typiquement ce type d'applications que l'on trouve dans l'informatique en « nuage » (« cloud computing » en anglais). Les microservices d'une application sont déployés sur une ou plusieurs grappe(s) de serveurs (« server cluster ») constitutives le « nuage ».

Les microservices sont couramment déployés sous la forme de conteneurs. Il s'agit d'une méthode de virtualisation légère. Le ou les conteneur(s) exécutés sur un serveur hôte de la grappe de serveurs partage(nt) le noyau du système d'exploitation de ce serveur hôte. Chaque conteneur renferme un microservice et un système d'exploitation léger. Dans le conteneur, le microservice fonctionne dans son propre environnement, comme une application totalement autonome. Les différents conteneurs associés à une application microservices communiquent entre eux, à travers des ports adaptés, sur un bus de communication virtuel de la grappe de serveurs.

Le déploiement d'une application microservices sur une grappe de serveurs est effectué au moyen d'un serveur d'orchestration de la grappe de serveurs.

Un déploiement est réalisé manuellement par le biais d'une série de commandes ou automatiquement par le biais d'un ou plusieurs fichiers de déploiement. Un fichier de déploiement définit un modèle de déploiement des conteneurs de l'application microservice à déployer. Ce fichier est interprété par le serveur d'orchestration pour effectuer le déploiement de l'application dans la grappe de serveurs.

Cependant, les fichiers de déploiement sont devenus volumineux (de l'ordre de plusieurs milliers de lignes) de sorte que leur codage est devenu complexe et leur vérification particulièrement difficile. Plus précisément, il est difficile de préparer un fichier de déploiement en garantissant la sécurité du déploiement correspondant. En effet, un fichier de déploiement n'offre que peu de visibilité sur ce qui est réellement implémenté. En particulier, les aspects de sécurité résultent de paramètres disséminés à différents niveaux d'un fichier de déploiement. Par exemple, alors que des paramètres de sécurité particuliers ont été définis pour chaque conteneur, des paramètres de sécurité généraux peuvent être définis au niveau des regroupements d'exécution de conteneurs. Ces paramètres généraux peuvent alors venir préempter tout ou partie de ce qui a été prévu au niveau des conteneurs.

Ainsi, un fichier de déploiement mal préparé peut conduire à un déploiement présentant des failles de sécurité.

Il apparaît donc nécessaire de renforcer la sécurité des infrastructures de « cloud computing » en analysant les fichiers de déploiement d'applications microservices pour en déterminer le niveau de sécurité et les vulnérabilités potentielles.

Dans ce qui suit, on s'intéresse plus particulièrement à la plateforme d'orchestration « Kubernetes » (marque déposée). Il s'agit d'un logiciel « open-source » qui, lorsqu'il est exécuté sur un serveur d'orchestration, permet d'automatiser le déploiement, la montée en charge et la mise en œuvre de conteneurs d'application sur des grappes de serveurs. Kubernetes est largement utilisé, mais d'autres plateformes d'orchestrations pourraient tout aussi bien être mises en œuvre, comme « Openshift » (marque déposée), « Rancher » (marque déposée), « Swarm » (marque déposée), « Nomad » (marque déposée), etc. Dans l'environnement Kubernetes, un regroupement d'exécution de conteneurs est dénommé pod

Le document CN111737699A propose un outil de renforcement de la sécurité pour la plateforme d'orchestration Kubernetes à partir d'un guide préparé par le centre pour la sécurité de l'Internet - CIS (« Center for Internet Security »). Ce guide CIS propose les meilleures pratiques qu'il convient de mettre en œuvre lors de l'utilisation de la plateforme d'orchestration Kubernetes.

Cet outil comprend plusieurs modules dont : un module d'entrée qui traite les fichiers de déploiement, un module de balayage de sécurité, un module de sauvegarde, un module de renforcement de sécurité, et un module de sortie.

Cet outil permet notamment d'automatiser un certain nombre de balayages (« scan ») des fichiers de déploiement à partir de règles du guide CIS.

Cependant, cet outil ne permet pas de réaliser des balayages automatisés s'appuyant sur d'autres règles que les recommandations du CIS. Il serait en effet souhaitable de pouvoir effectuer des balayages des fichiers de déploiement en fonction de différents types d'attaques informatiques.

De plus, cet outil connu ne permet pas d'obtenir une vision d'ensemble de la sécurité du modèle de déploiement. En effet, chacun des balayages que réalise cet outil est effectué individuellement sur le fichier de déploiement. En particulier, les balayages sont chacun réalisés sur un type particulier d'objets du fichier de déploiement. La sortie de cette analyse se résume en fait à une simple liste de vérifications (« check list »).

Aucun résultat n'est ainsi mis en perspective ou corrélé avec d'autres résultats de balayages pour proposer un rapport de sécurité plus complet. Par exemple, un modèle de configuration qui définit un premier conteneur exposé sur l'Internet, tout en étant relié à un second conteneur permettant une élévation de privilèges, présente un risque de sécurité très important qui doit pouvoir être identifié, dans la mesure où le premier conteneur constitue une porte d'entrée permettant à un attaquant d'accéder depuis l'Internet au second conteneur, pour s'y attribuer des privilèges, lui permettant ensuite de lire ou d'écrire des données dans les microservices ou leur environnement d'exécution.

Un autre inconvénient majeur de cet outil connu est qu'il ne permet pas d'automatiser toutes les règles du guide CIS. Certaines d'entre elles doivent donc toujours être effectuées manuellement. C'est par exemple le cas des règles de la rubrique 5 relative aux politiques (« Policies ») du guide CIS.

Le document MUBIN UL HAQUE et al. "KGSecConfig: A Knowledge Graph Based Approach for Secured Container Orchestrator Configuration", ONLINE LIBRARYCORNELL UNIVERSITY ITHACA, NY 14853, 21 décembre 2021 (2021-12-21), XP091122710 divulgue un algorithme permettant de générer automatiquement un fichier de configuration sécurisé à partir d'un fichier de configuration initial. Cet algorithme est fondé sur une analyse syntaxique du fichier de configuration initial pour isoler, sous la forme d'un arbre, les attributs d'un objet d'intérêt. Il compare ensuite les attributs ainsi isolés, aux attributs que devraient avoir cet objet selon un arbre de référence de sécurité. Le fichier analysé est finalement corrigé selon les résultats de cette comparaison.

La présente invention a donc pour but de répondre à ces problèmes.

Pour cela l'invention a pour objet un procédé d'analyse de sécurité d'un fichier de déploiement propre à être interprété par un serveur d'orchestration d'une grappe de serveurs pour réaliser un déploiement d'une application microservices, un produit programme d'ordinateur comportant des instructions logicielles qui, lorsqu'elles sont exécutées par un ordinateur, mettent en œuvre le procédé d'analyse de sécurité précédent, et un serveur d'orchestration d'une grappe de serveurs propre à exécuter le programme d'ordinateur précédent pour réaliser un déploiement d'une application microservices selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'une infrastructure informatique en nuage comportant un serveur d'orchestration selon l'invention ;
[Fig 2] La figure 2 est une représentation sous forme d'unités fonctionnelles du serveur d'orchestration de la figure 1 ;
[Fig 3] La figure 3 est un graphe de sécurité obtenu par le serveur d'orchestration de la figure 2 ; et,
[Fig 4] La figure 4 est une représentation sous forme de bocs du procédé selon l'invention.

### Structure générale

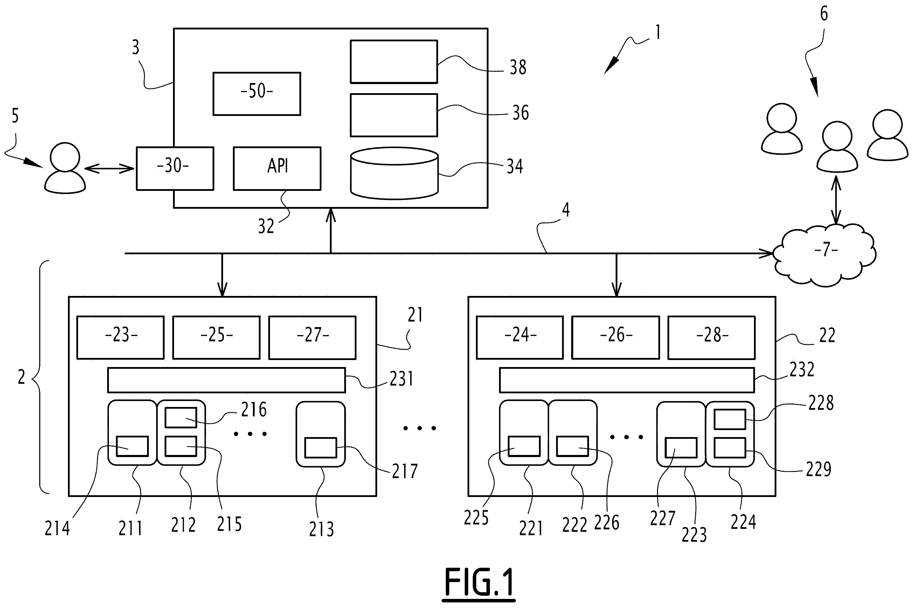

La figure 1 représente de manière schématique une infrastructure informatique en nuage (« cloud computing »), ou infrastructure 1. Elle exécute une ou plusieurs application(s). Un utilisateur 6, qui accède à l'infrastructure 1 via l'Internet 7, pourra bénéficier d'une ou plusieurs de ces applications.

L'infrastructure 1 est structurée de manière à former une grappe de serveurs. L'infrastructure 1 comporte un serveur d'orchestration (ou « serveur(s) maître(s) ») 3, une pluralité de serveurs d'application (ou « serveurs esclaves ») 2, et un réseau de communication 4 qui relie les différents serveurs entre eux et à l'Internet 7. En variante, l'infrastructure pourrait comporter plusieurs serveurs d'orchestration et/ou plusieurs grappes de serveurs connectées via un réseau, par exemple l'Internet. Sur la figure 1, la pluralité de serveurs d'application 2 comporte deux serveurs 21 et 22.

L'infrastructure 1 est adaptée pour mettre en œuvre l'environnement Kubernetes (tel que défini sur le site internet de kubernetes, par exemple à l'adresse : https://kubernetes.io/fr/docs/concepts/overview/components/). Dans ce qui suit, sera plus particulièrement décrit cet environnement, mais, en variante, d'autres types d'environnement peuvent être mis en oeuvre.

La pluralité de serveurs d'application 2 exécute une ou plusieurs applications microservices. Chaque serveur exécute un ou plusieurs conteneurs, c'est-à-dire un microservice et son environnement.

Dans l'environnement Kubernetes, un conteneur est encapsulé dans un « pod » (ou capsule). Un pod comporte un ou plusieurs conteneurs qui ont la garantie d'être co-localisés sur une machine hôte et partager les ressources de cette machine hôte. Un serveur peut exécuter plusieurs pods. Ainsi, dans l'environnement Kubernetes, la plus petite unité de déploiement envisageable est un pod. Chaque pod (ou plutôt toutes les instances d'un même pod) possède une adresse IP unique à l'intérieur de la pluralité de serveurs d'application 2.

Une application résulte de l'exécution de différents microservices, chaque microservice étant contenu dans un conteneur, lui-même encapsulé dans un pod.

Ainsi par exemple, le serveur d'application 21 exécute les pods 211, 212 et 213, qui intègrent respectivement les conteneurs 214, 215 et 216, et 217. Ainsi, le serveur d'application 22 exécute les pods 221, 222, 223 et 224, qui intègrent respectivement les conteneurs 225, 226, 227, et 228 et 229.

Le serveur d'orchestration 3 permet d'automatiser le déploiement, la montée en charge et la mise en œuvre des conteneurs des applications microservices sur la pluralité de serveurs d'application 2.

Le serveur d'orchestration 3 comporte un serveur d'interface de programmation d'application (« Application Programming Interface »), ou serveur d'API 32, une base de données 34, un planificateur 36 et un contrôleur 38. Le serveur d'orchestration 3 comporte également une interface homme - machine, IHM 30, permettant à un opérateur d'interagir avec le serveur d'orchestration 3.

Le serveur d'API 32 offre un ensemble de définitions et de protocoles qui facilitent la création et l'intégration d'applications de gestion de la pluralité de serveurs d'application 2. Au moyen de l'IHM 30, l'opérateur peut accéder au serveur d'API 32 de manière à éditer, paramétrer et exécuter les applications de gestion.

La base de données 34 est un espace de stockage des données sensibles. Il s'agit de préférence d'un magasin clés-valeurs, comme par exemple le magasin « etcd » de l'environnement d'orchestration Kubernetes. Les applications de gestion lisent et écrivent des données dans la base de données 34. La base de données 34 stocke notamment les données, transmises depuis les serveurs de la pluralité de serveurs d'application 2, permettant de représenter l'état de la pluralité de serveurs d'application 2 à n'importe quel instant de son fonctionnement.

La base de données 34 stocke également des fichiers de déploiement, ainsi que des données de maintenance permettant d'assurer la redondance et la résilience d'un déploiement.

Un fichier de déploiement définit un modèle pour le déploiement d'une application microservices.

Un fichier de déploiement indique les différents conteneurs et pods concernés par le déploiement, ainsi que la configuration de chacun de ces composants.

Un fichier de déploiement est construit par un opérateur, éventuellement à partir d'un « template » (patron) adapté.

Le planificateur 36 a pour fonction, lors d'un déploiement, de sélectionner le serveur de la pluralité de serveurs d'application 2 sur lequel chaque pod d'un déploiement va être exécuté. Les facteurs pris en compte pour les décisions de planification comprennent notamment les exigences individuelles et collectives en ressources, les contraintes sur les matériels, les logiciels, les politiques, les spécifications d'affinité et d'anti-affinité, la localité des données, et/ou les interférences entre charges de travail et les dates limites.

Le contrôleur 38 est capable d'effectuer différentes tâches de contrôle soit de l'orchestration Kubernetes, soit de la pluralité de serveurs d'application 2.

Les contrôles de l'orchestration Kubernetes sont par exemple : détecter et apporter une réponse en termes de redéploiement lorsqu'un serveur esclave tombe en panne ; maintenir le bon nombre de répliques d'un pod ; créer des comptes par défaut et des jetons pour l'accès au serveur d'API.

Les contrôles de la pluralité de serveurs d'application 2 sont par exemple : déterminer si un serveur a été supprimé dans la grappe après avoir cessé de répondre ; mettre en place des routes dans la grappe de serveurs ; créer, mettre à jour et supprimer des répartiteurs de charge (« load balancers ») fournis par la grappe de serveurs ; créer, attacher et monter des volumes de stockage sur les serveurs d'application de la grappe.

Pour l'orchestration, un serveur d'application comporte en outre plusieurs modules fonctionnels pour la gestion, en coordination avec le serveur d'orchestration 3, de l'exécution des pods.

Un serveur d'application comporte par exemple un module « kubelet », un module « kube-proxy » et un module « cAdvisor ». Par exemple, le serveur 21 comporte un module « kubelet » 23, un module « kube-proxy » 25 et un module « cAdvisor » 27, tandis que le serveur 22 comporte un module « kubelet » 24, un module « kube-proxy » 26 et un module « cAdvisor » 28.

Un module « kubelet » prend en compte un ensemble de spécifications qui lui est fourni par le serveur d'orchestration 3 pour s'assurer du bon fonctionnement de chaque conteneur et/ou pod exécuté sur le serveur d'application sur lequel est exécuté le module « kubelet ». Un module « kubelet » prend en charge le démarrage, l'arrêt, et la maintenance des conteneurs organisés en pods. Un module « kubelet » surveille l'état d'un pod et s'il n'est pas dans l'état voulu, le pod sera redéployé sur le même serveur d'application hôte.

Un module « kube-proxy » est un mandataire réseau capable de maintenir des règles réseau sur les serveurs d'application. Ces règles réseau permettent une communication réseau vers les pods depuis des sessions réseau à l'intérieur ou à l'extérieur de la grappe de serveurs.

Un module « cAdvisor » analyse des métriques de mémoire, de CPU, de fichiers et d'utilisation du réseau pour tous les conteneurs et/ou pods s'exécutant sur le serveur d'application sur lequel le module « cAdvisor » est exécuté. Ces données d'analyse sont rapatriées dans la base de données 34 et participent à la détermination de l'état courant de l'infrastructure 1. Le statut d'un serveur d'application hôte est relayé à intervalle de quelques secondes via des messages d'état vers le serveur d'orchestration. Dès que ce dernier détecte un défaut sur un serveur d'application, le contrôleur 38 voit ce changement d'état et lance les pods sur d'autres serveur d'application de l'infrastructure 1.

Par ailleurs, chaque serveur d'application exécute un module d'environnement d'exécution des conteneurs et/ou pods. Il s'agit d'un logiciel responsable de l'exécution des conteneurs. Sur la figure 1, le module du premier serveur d'application 21 est référencé 231 et celui du serveur d'application 22 est référencé 232. Kubernetes est compatible avec plusieurs environnements d'exécution de conteneurs connus : « Docker », « containerd », « cri-o », « rktlet » ainsi que toute implémentation de l'interface d'exécution de conteneur - CRI (« Container Runtime Interface ») de Kubernetes.

### Module d'analyse

Selon l'invention, l'infrastructure 1 comporte un module d'analyse de sécurité 50. Ce module est de préférence exécuté sur un serveur d'orchestration, tel que le serveur 3, mais, en variante, il pourrait être exécuté sur une autre machine de l'infrastructure 1.

Le module d'analyse de sécurité 50 a pour fonction d'analyser un fichier de déploiement par exemple de la base de données 34, avant son déploiement, de manière à y identifier des problèmes de sécurité et à aider l'opérateur du serveur d'orchestration 3 à adapter ce fichier de déploiement en conséquence des problèmes identifiés.

Le module 50 est un programme d'ordinateur comprenant plusieurs unités fonctionnelles.

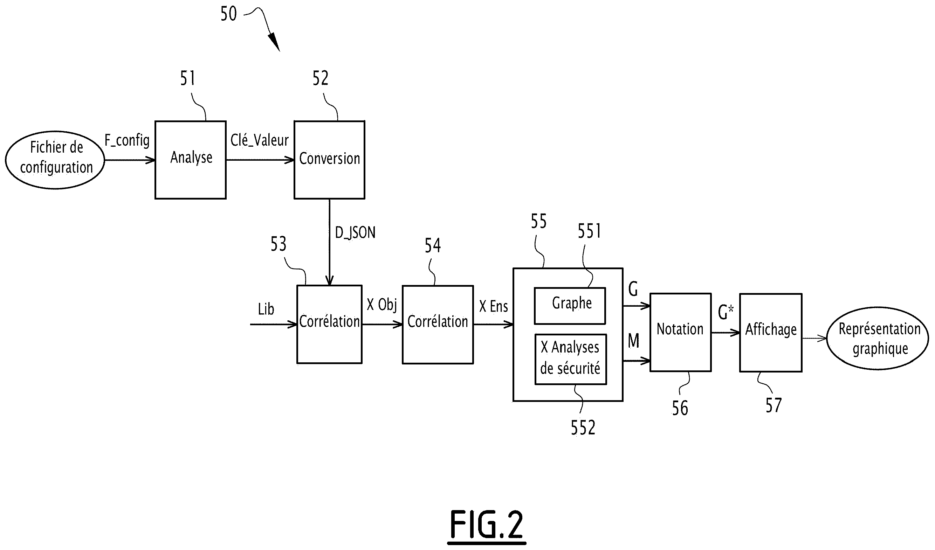

Dans le mode de réalisation représenté sur la figure 2, le module 50 comporte une unité d'analyse syntaxique 51, une unité de conversion 52, une unité d'agrégation 53, une unité de corrélation 54, une unité de génération de graphe et d'analyse de sécurité 55, une unité de notation 56 et une unité d'affichage 57.

Le module 50 prend en entrée un fichier de déploiement F_Config.

Un fichier de déploiement décrit les différents composants du modèle de déploiement correspondant : les conteneurs, les pods, les configurations des conteneurs, les configurations des pods, les politiques de sécurité des pods, etc.

La configuration d'un pod consiste notamment à : allouer des ressources mémoire et CPU au pod ; définir un volume pour le stockage des fichiers associés à chaque conteneur du pod ; configurer les comptes de service pour ce pod (un compte de service « ServiceAccount » donne une identité à chaque processus qui s'exécute dans un pod) ; récupération d'une image d'un registre privé (un pod peut utiliser un code « Secret » pour pouvoir récupérer des données d'un registre privé) ; configurer les sondes du pod qui seront utilisées par le « Kubelet » associé ; assigner un pods à une machine particulière de la grappe de serveurs ; configurer l'initialisation du pod avant de pouvoir exécuter le ou l'un de ses conteneurs ; partager l'espace de nommage « Namespace » des processus entre les conteneurs d'un pod (lorsque le partage de cet espace est activé, les processus d'un conteneur sont visibles pour tous les autres conteneurs de ce pod)...

La politique de sécurité d'un pod consiste notamment à : définir des objets de type « NetworkPolicy » agissant comme des règles de pare-feu entre les pods ; définir des objets de type « Role » attribuant des autorisations au niveau d'un « Namespace » et « RoleBinding » liant un Role à un ServiceAccount ; définir des objets de type « ClusterRole » attribuant des autorisations au niveau de la grappe de serveurs et « ClusterRoleBinding » liant un « ClusterRole » à un « ServiceAccount » ; définir des objets de type « Security Context » attribuant des paramètres de contrôle des privilèges et des accès pour un pod.

Dans une des réalisations possibles, le procédé prend en charge des fichiers de déploiement au format YAML, de préférence respectant la syntaxe de l'environnement Kubernetes.

Un exemple d'un extrait d'un fichier de déploiement YAML est donné ci-après :

| |
|---|
| ```
---
   apiVersion: v1
   kind: Secret
   metadata:
     name: rabbitmq
     labels:
      app: rabbitmq
      chart: rabbitmq-6.16.6
   type: Opaque
   data:
     rabbitmq-password: "Y2hhbmdlbWU="
     rabbitmq-erlang-cookie: "QWRaMjN0QlVteWJEeEVLcFZxY09iMnk5TDlBREFVang="
   ---
   apiversion: v1
   kind: Service
   metadata:
     name: rabbitmq-headless
     labels:
      app: rabbitmq
      chart: rabbitmq-6.16.6
   spec:
     clusterIP: None
     ports:
     - name: epmd
      port: 4369
      targetport: epmd
     - name: amqp
      port: 5672
      targetPort: amqp
     selector:
      app: rabbitmq
   ---
   apiversion: v1
   kind: ServiceAccount
   metadata:
     name: rabbitmq
     labels:
      app: rabbitmq
      chart: rabbitmq-6.16.6
   ---
   kind: Role
   apiversion: rbac.authorization.k8s.io/v1
   metadata:
     name: rabbitmq-endpoint-reader
     labels:
      app: rabbitmq
      chart: rabbitmq-6.16.6
   rules:
   - apiGroups: [""]
     resources: ["endpoints"]
    verbs: ["get"]
   ---
   kind: RoleBinding
   apiversion: rbac.authorization.k8s.io/v1
   metadata:
     name: rabbitmq-endpoint-reader
     labels:
      app: rabbitmq
      chart: rabbitmq-6.16.6
   subjects:
   - kind: ServiceAccount
     name: rabbitmq
   roleRef:
    apigroup: rbac.authorization.k8s.io
     kind: Role
     name: rabbitmq-endpoint-reader
   ---
   apiversion: apps/v1
   kind: Pod
   metadata:
     name: rabbitmq
     labels:
      app: rabbitmq
      chart: rabbitmq-6.16.6
   spec:
     serviceName: rabbitmq-headless
     replicas: 1
     updateStrategy:
      type: RollingUpdate
     selector:
      matchLabels:
       app: rabbitmq
    template:
      metadata:
       labels:
        app: rabbitmq
        chart: rabbitmq-6.16.6
      spec:
       serviceAccountName: rabbitmq
       containers:
       - name: rabbitmq
        image: docker.io/bitnami/rabbitmq:3.8.2-debian-10-r0
        imagePullPolicy: "IfNotPresent"
        command:
         - bash
         - \|
           mkdir -p /opt/bitnami/rabbitmq/.rabbitmq/
           exec rabbitmq-server
        ports:
        - name: epmd
          containerPort: 4369
        - name: amqp
          containerport: 5672
        livenessProbe:
          exec:
           command:
            -sh
            -rabbitmq-api-chec "http://user:$RABBITMQ_PWD@127.0.0.1:15672/api/health/node"
       securityContext:
        fsGroup: 1001
        runAsUser: 1001
   ---
``` |

L'unité d'analyse 51 est capable d'analyser syntaxiquement le fichier de configuration F_config afin d'en extraire des paires clé-valeur.

L'unité de conversion 52 est capable de convertir les paires clé-valeur en une structure de données plus adaptée au langage de programmation utilisé. Une des réalisations possibles est la sérialisation des paires clé-valeur en utilisant le format JSON, pour un module 50 utilisant le langage de programmation « Python ». Le format JSON (« JavaScript Object Notation ») est un format de données textuelles dérivé de la notation des objets du langage JavaScript. Il permet de représenter de l'information structurée. Ainsi, en sortie de l'unité 52 est obtenu un document, D_JSON, au format JSON. Le module 52 est optionnel, puisqu'il ne correspond qu'à une mise en forme des paires clé-valeur pour faciliter les traitements réalisés en aval.

L'unité d'agrégation 53 traite le document D_JSON délivré par l'unité 52 (ou en variante les paires clé-valeur fournies par l'unité 51).

L'unité 53 prend également en entrée une librairie de templates d'objets (ou de patrons d'objets), par exemple des classes d'objets Python dans une des réalisations possibles. Cette librairie est prédéfinie.

Les templates d'objets correspondent aux principaux objets Kubernetes, qui sont : Namespaces, Pods, Deployments, DaemonSets, ReplicaSets, Containers, InitContainers, Services, ServiceAccounts, Roles, ClusterRoles, RoleBindings, ClusterRoleBindings, PodSecurityPolicies, NetworkPolicies, Secrets, Volumes, VolumeMounts, PersistentVolumes, PersistentVolumeClaims.

Chaque template d'objet est défini par une pluralité d'attributs, de préférence définis en suivant la syntaxe Kubernetes.

L'instanciation d'un template d'objet correspond à l'attribution d'une valeur à chaque attribut de ce template, ces valeurs provenant du document D_JSON.

L'unité 53 a ainsi pour fonction d'instancier une pluralité d'objets Obj à partir des données du document D_JSON, chaque objet répondant au format du template d'objet dont il dérive.

Par exemple, le traitement de l'extrait de fichier de déploiement donné ci-dessus conduit à la pluralité d'objets suivante:

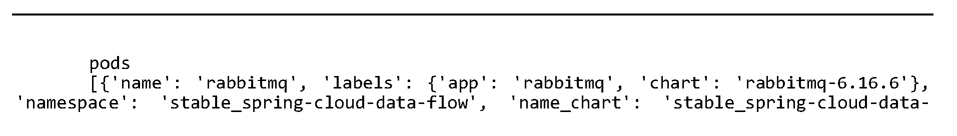

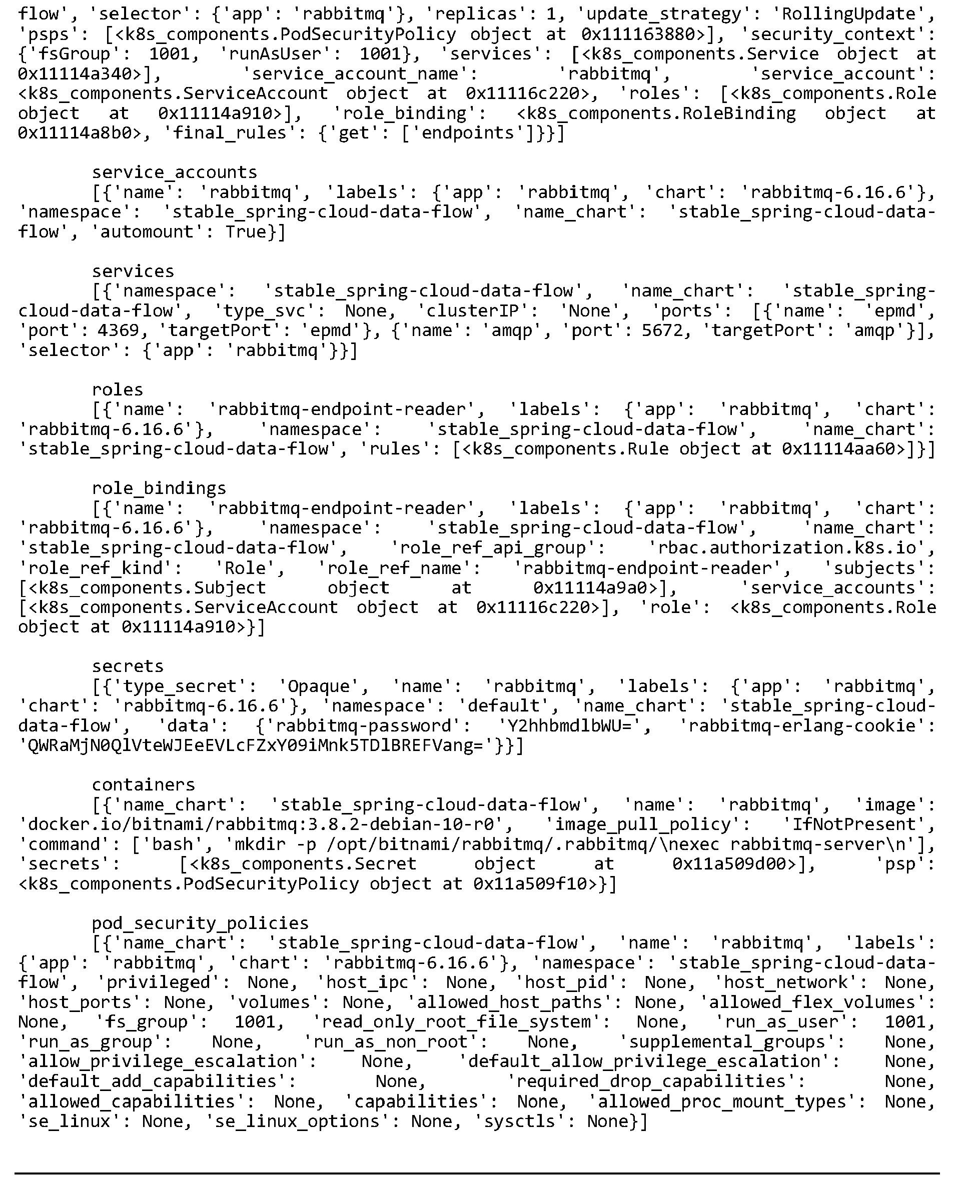

Les unités 51, 52 et 53 permettent ainsi une interprétation du contenu du fichier de déploiement analysé en atomisant l'information contenue dans le fichier, puis en rassemblant l'information élémentaire ainsi obtenue dans des objets simples, chaque objet correspondant à l'observation d'un pod ou d'un conteneur sous un certain angle.

A noter que pour un template d'objet donné, ledit objet peut être défini sous diverses formes dans le fichier de déploiement. Par exemple, un objet « Secrets » peut être instancié à partir d'un objet Kubernetes appelé « Secret », mais également à partir de la définition d'un volume d'un conteneur (si le type de secret est un volume), lui-même défini dans la définition d'un pod, ou encore à partir de l'attribut « env » (pour « environnement ») d'un conteneur.

De plus, l'instanciation d'objet nécessite une fusion des informations concernant un même objet mais disséminées à plusieurs endroits du fichier de déploiement source. Par exemple, la politique de sécurité d'un conteneur (« security context ») est définie dans l'attribut « securityContext » du conteneur. Une politique de sécurité peut également être définie au niveau du pod contenant le conteneur, à deux endroits différents, à savoir dans l'attribut « securityContext » du pod et/ou dans un objet « PodSecurityPolicy » associé au pod. Si tel est le cas, la politique de sécurité du pod préempte celle du conteneur et une étape de fusion de ces diverses configurations est nécessaire pour déterminer la politique qui est effectivement définie pour ce composant. L'unité de corrélation 54 est ensuite capable d'associer les objets de la pluralité d'objets Obj entre eux pour constituer une pluralité d'ensembles d'objets Ens. Chaque ensemble est associé uniquement à un pod ou à un conteneur. L'unité 54 exploite les relations entre les valeurs des attributs des objets Obj. Les objets sont par exemple rassemblés en fonction des attributs « nodeSelector » ou « labelSelector », qui sont, dans la syntaxe propre à Kubernetes, des clés de référence à d'autres objets.

Dans l'exemple ci-dessus relatif à un unique pod, l'unité 54 est propre à extraire un seul ensemble Ens comportant en tout sept objets, qui sont dans cet exemple tous de natures différentes : un objet « pod» dans la liste « pods », un objet « service account » dans la liste « service_accounts », un objet « service » dans la liste « services » un objet « role » dans la liste « roles », un objet « role_binding » dans la liste « role_bindings », un objet « secret » dans la liste « secrets », un objet « container » dans la liste « containers » et un objet « pod_security_policy » dans la liste « pod_security_policies ».

D'une liste à l'autre, les objets corrélés et appartenant par conséquent au même ensemble Ens sont identifiés par exemple sur la valeur de la clé « name ».

Ainsi, pour chaque pod et conteneurs du fichier de déploiement, on obtient un ensemble d'objets Ens, ces objets sont de diverses natures, mais ils sont corrélés entre eux.

La pluralité d'ensembles d'objets Ens constitue un système cohérent de description du modèle de déploiement associé au fichier analysé.

L'unité de génération de graphe et d'analyse de sécurité 55 comporte un premier sous-module 551 et un second sous-module 552.

Le premier sous-module 551 est capable d'élaborer un graphe G à partir de la pluralité d'ensembles d'objets, Ens, délivrée en sortie de l'unité de corrélation 54.

Un graphe G comporte des nœuds et des liens. Un lien connecte deux nœuds.

Chaque nœud est un nœud pod (c'est-à-dire associé à un pod) ou un nœud conteneur (c'est-à-dire associé à un conteneur) du fichier de déploiement.

Un lien représente une interaction entre les deux nœuds qu'il connecte. La connexion peut être asymétrique.

Plus précisément, un lien entre un nœud pod et un nœud conteneur est un lien d'exécution indiquant que ce conteneur est exécuté dans ou par ce pod.

Un lien entre deux nœuds pods indique la possibilité d'une faille de sécurité autorisant la propagation d'une certaine forme d'attaque d'un pod vers l'autre. Ces liens entre deux nœuds pods peuvent être de différentes natures. Par exemple, un lien entre deux nœuds pods peut représenter l'absence ou la défaillance d'une politique de sécurité régissant les communications entre les pods connectés. En effet, des politiques réseau (« network policies ») peuvent être définies entre deux pods, pour interdire, autoriser, ou autoriser sous certaines conditions (par exemple selon un protocole particulier et/ou une liste de ports donnée) les communications d'un pod vers un autre pod.

Un lien entre deux nœuds pods peut aussi matérialiser la présence ou l'absence d'affinités (« pod affinities ») ou d'anti affinités (« pod anti-affinities ») entre deux pods. Cela traduit la contrainte que deux pods doivent se situer sur le même serveur de la grappe, ou au contraire être localisés sur deux serveurs distincts.

Finalement, un dernier type de lien entre deux nœuds pods est le fait qu'un utilisateur dans un pod puisse directement exécuter un autre pod, puisque le compte de service qui lui est associé le permet (verb « exec » et ressource « pod » dans le rôle relatif au compte de service).

Le second sous-module 552 applique différentes analyses de sécurité sur le graphe G afin d'évaluer le degré de sécurité du fichier de déploiement analysé et de fournir des indicateurs quantitatifs sur le modèle de déploiement correspondant.

En particulier, les analyses de sécurité effectivement appliquées comportent tout (ou plusieurs) des six analyses suivantes :
1) Vulnérabilité des conteneurs : pour chaque conteneur, on compte le nombre de vulnérabilités dont la dangerosité est haute ou critique (en variante, on récupère le nombre de vulnérabilités via des outils « open-source » tels que « docker scan » qui détermine le système d'exploitation et les librairies installées dans le conteneur, puis lie ces informations à des bases de données de vulnérabilités disponibles en ligne) ; est par exemple mis en œuvre l'évaluation standardisée de la criticité des vulnérabilités « Common Vulnerability Scoring System » - CVSS donnant un score compris entre 0 et 10 ; on compte alors uniquement les vulnérabilités les plus critiques, c'est-à-dire dont le score CVSS est, de préférence, supérieur à 7 ;
2) Accessibilité des services associés aux pods : on évalue la politique d'accessibilité des microservices hébergés sur chacun des pods, puisque, dans un fichier de déploiement, les pods peuvent être accessibles soit par les composants Kubernetes, soit à l'intérieur du cluster Kubernetes, soit encore exposés à l'extérieur de la grappe de serveurs ;
3) Politiques de sécurité associées aux pods : on évalue la vulnérabilité des politiques de sécurité des pods et de la configuration de sécurité (« security context ») des pods et des conteneurs ; cette analyse porte sur les informations définissant l'environnement des pods et conteneurs, comme la liste des privilèges (par exemple les « Linux capabilities ») proscrits ou autorisés et qui sont, par conséquent, potentiellement dangereux, les différents types de volumes autorisés, les permissions associées aux fichiers (lecture seule ou écriture), les utilisateurs autorisés (administrateur (« root ») ou non), la permission de lancer des conteneurs privilégiés ou non, l'usage autorisé ou non du réseau de la machine hôte et éventuellement la liste des ports autorisés, l'usage autorisé ou non des « Namespace » Linux et des identifiants de processus exécuté sur la machine hôte, etc. ;
4) Comptes de service associés aux pods : on évalue les comptes de service des pods et les permissions qui leur sont associées, comme par exemple la capacité de créer de nouveaux pods, de lire des secrets, d'exécuter d'autres pods, etc. ;
5) Politiques réseaux : on évalue les règles de pare-feu qui régissent les interactions entre les pods, c'est-à-dire quels pods peuvent communiquer entre eux, sur quel port et selon quel protocole ;
6) Affinités et anti-affinités entre différents pods : on évalue l'affinité des différents pods, c'est-à-dire le fait que deux pods doivent se situer sur le même serveur hôte (« pod affinity »), ou au contraire être nécessairement situés sur deux serveurs hôtes différents (« pod anti-affinity »).

L'application de chacune de ces analyses de sécurité conduit au calcul d'une pluralité d'indicateurs pour chaque élément du graphe G, qu'il s'agisse d'un noeud ou d'un lien. On obtient une matrice M, dont les colonnes correspondent à chacun des noeuds et des liens du graphe G et dont les lignes correspondent à chacune des analyses de sécurité.

L'unité de notation 56 associe un score global à chacun des noeuds et des liens du graphe G.

Selon une première échelle d'analyse de sécurité, l'unité 56 agrège les différents indicateurs de la matrice M. Eventuellement, on applique une certaine pondération entre les indicateurs, c'est-à-dire entre les analyses de sécurité appliquées par l'unité 55. Un premier score global, ou score de vulnérabilité, est ainsi obtenu pour chaque noeud et chaque lien du graphe G. Cette première échelle de notation donne une idée globale de la vulnérabilité du modèle de déploiement.

Selon une seconde échelle d'analyse de sécurité, l'unité 56 calcule des sous-scores de dangerosité pour chaque famille de tactiques de la matrice MITRE ATT&CK. Il est en effet plus pertinent de qualifier un fichier de déploiement en fonction des principales techniques d'attaques ou phases d'une attaque.

La matrice MITRE ATT&CK est une base de référence, à jour, des techniques d'attaques regroupées par objectif (ou tactique). En particulier, la matrice est composée de neuf familles de tactiques distinctes : « Initial access », « Execution », « Persistence », « Privilege escalation », « Defense evasion », « Credential access », « Discovery », « Lateral movement », et « Impact ».

La matrice MITRE ATT&CK permet d'obtenir une évaluation du niveau de sécurité des configurations du modèle de déploiement, grâce à une représentation précise des différentes techniques d'attaques et de leur propagation possible au sein du déploiement.

La représentation sous forme d'un graphe G du fichier de déploiement permet d'évaluer facilement chaque type d'attaque de la matrice MITRE ATT&CK. Le graphe G permet en effet la reconstruction des chemins d'attaques à partir des relations entre les éléments du graphe et leurs scores de vulnérabilité selon la première échelle.

Un sous-score de dangerosité pour chaque type d'attaque de la matrice MITRE ATT&CK est ainsi calculé.

Un second score global, ou score de dangerosité, est obtenu en agrégeant les sous-score de dangerosité, éventuellement en appliquant une pondération adaptée entre les différents types d'attaque.

Finalement, le graphe G est enrichi en associant à chaque noeud et à chaque lien de celui-ci le score global selon la première échelle (score de vulnérabilité) et/ou, éventuellement, le score global selon la seconde échelle (score de dangerosité).

L'unité d'affichage 57 est propre à afficher le graphe enrichi G* sur l'interface graphique 30.

Cette représentation d'un point de vue de la sécurité du fichier de déploiement permet à l'opérateur de modifier le fichier de déploiement analysé pour l'améliorer en le rendant moins vulnérable et moins dangereux. L'opérateur du serveur d'orchestration peut rapidement identifier les points faibles du modèle de déploiement. Il lui est alors aisé d'éditer le fichier de déploiement, d'en modifier une ou plusieurs lignes, et de relancer l'exécution du module 50 afin d'évaluer les effets de la modification.

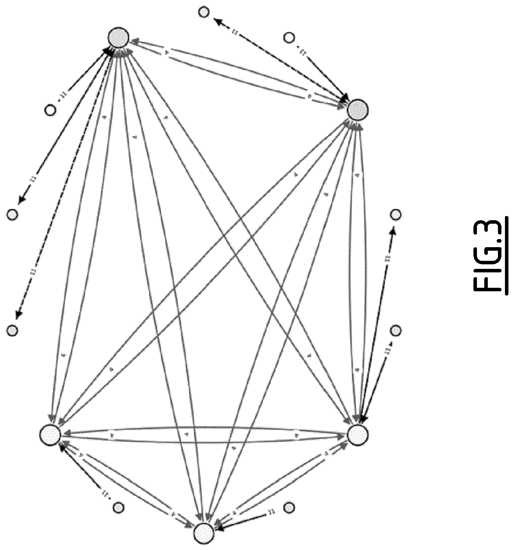

La figure 3 donne un exemple d'un graphe enrichi G* tel qu'il peut s'afficher sur l'IHM 30.

Ce graphe représente le modèle de déploiement du chart Helm : « spring-cloud-data-flow » de « stable ».

Chaque cercle représente un nœud du graphe : les plus grands cercles représentent les pods et les plus petits cercles représentent les conteneurs, qui composent chacun des pods.

Un code couleur est attribué à chaque nœud du graphe enrichi. Par exemple, un rouge plus ou moins foncé est attribué à un nœud en fonction de la valeur du score de vulnérabilité qui a été calculé pour ce nœud. On peut ainsi voir que les conteneurs possèdent un nombre de vulnérabilités hautes ou critiques plutôt faible (entre 17 et 71). La mise en œuvre de l'invention permet de scanner les vulnérabilité de tous les nœuds représentant des conteneurs, alors que certains d'entre eux ne pouvaient pas être scannés par les outils de l'état de l'art.

Certains pods possédant les permissions de créer de nouveaux pods, de lire les secrets et d'exécuter d'autres pods. En conséquence, leur score de dangerosité est élevé.

L'affichage du graphe enrichi peut représenter différents types de liens entre les pods. Par exemple, sur la figure 3, les liens représentent le fait qu'il n'existe pas de règles de pare-feu entre les pods connectés. Dans un autre affichage du graphe enrichi, les liens affichés représentent des liens d'exécution, autrement dit l'utilisateur d'un pod a la possibilité de se déplacer vers un autre pod.

### Procédé

Le procédé 100 selon l'invention consiste à exécuter le module 50.

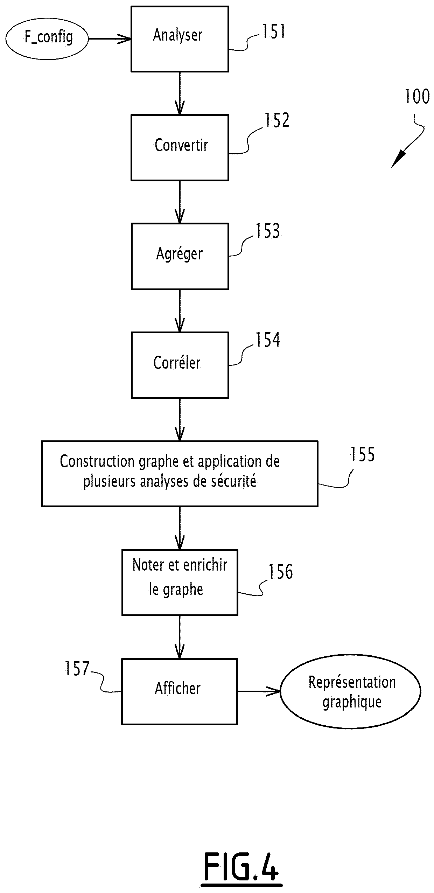

Comme illustré sur la figure 4, il comporte les étapes suivantes :
Dans une étape 151, l'unité 51 est exécutée pour analyser syntaxiquement un fichier de déploiement F_Config et en extraire des paires clé-valeur.
Dans une étape 152, l'unité 52 est exécutée pour convertir les paires clé-valeur et construire un document D_JSON.
Dans une étape 153, l'unité 53 est exécutée pour agréger les informations du document D_JSON pour obtenir une pluralité d'objets Obj.
Dans une étape 154, l'unité 54 est exécutée pour corréler entre eux les objets Obj pour les rassembler dans une pluralité d'ensembles Ens.

Le procédé 100 se poursuit par une étape 155 d'exécution de l'unité de génération de graphe et d'analyse de sécurité 55 pour construire un graphe G à partir de la pluralité d'ensemble Ens et appliquer sur les objets de ce graphe différentes analyses de sécurité afin d'évaluer le degré de sécurité du modèle de déploiement. Cela se traduit par le calcul de différents indicateurs.

Dans une étape 156, l'unité de notation 56 est exécutée pour calculer un score de vulnérabilité et avantageusement un score de dangerosité pour chacun des éléments du graphe, noeuds et liens.

Enfin à l'étape 157, l'unité d'affichage 57 est exécutée pour afficher sur l'interface homme - machine 30 un graphe enrichi G* obtenu à l'issue de l'étape 156, associant à chaque élément du graphe le ou les scores obtenus.

### Avantages

La présente invention se fonde sur l'utilisation d'un graphe permettant de représenter les composantes d'un déploiement selon différents aspects liés à la sécurité afin d'évaluer les risques associés.

La présente invention permet de mettre en corrélation diverses caractéristiques de sécurité d'un modèle de déploiement : interaction entre les divers unités, co-localisation des unités sur différentes machines physiques, métriques de résilience, permissions des utilisateurs, modes d'authentification et d'autorisation, etc.

De manière particulièrement intéressante, un modèle de déploiement est évalué en regard de types caractéristiques d'attaque (tel que ceux définis dans l'environnement MITRE ATT&CK) afin d'évaluer comment le déploiement proposé se comporte face à divers types d'attaques informatiques.

La présente invention, en proposant une modélisation graphique d'un fichier de déploiement sous l'angle de la sécurité, permet d'augmenter la visibilité dans ce type d'environnement, afin que les développeurs et les administrateurs puissent savoir ce qu'ils implémentent réellement et les potentiels risques de sécurité que cela implique. Il s'agit donc d'une aide à la prise de décisions en vue d'appliquer des méthodes de remédiation et des correctifs de sécurité dans une configuration d'une infrastructure en nuage.

Ainsi, l'invention, au-delà de l'identification de certains modèles de déploiement potentiellement dangereux, offre un moyen de remédier aux faiblesses identifiées.

## Revendications

1. Procédé (100), mis en œuvre par ordinateur, d'analyse de sécurité d'un fichier de déploiement (F_Config) propre à être interprété par un serveur d'orchestration (3) d'une grappe de serveurs (1) pour réaliser un déploiement d'une application microservices, le fichier de déploiement (F_Config) comportant des conteneurs et des pods, les pods étant des regroupements d'exécution des conteneurs, le procédé comporte les étapes de :
- extraire (151, 152, 153) du fichier de déploiement une pluralité d'objets (Obj), chaque objet étant une instance d'un objet générique et chaque objet générique appartenant à une librairie d'objets génériques prédéfinis ;
- corréler (154) les objets de la pluralité d'objets entre eux, de manière à définir une pluralité d'ensembles d'objets (Ens), chaque ensemble d'objets étant associé à un conteneur du fichier de déploiement ou à un regroupement d'exécution de conteneurs du fichier de déploiement ;
- élaborer (155) un graphe (G) comportant des nœuds et des liens, chaque nœud correspondant à un conteneur du fichier de déploiement ou à un regroupement d'exécution de conteneurs du fichier de déploiement, et chaque lien correspondant à une relation de sécurité entre les deux nœuds connectés par le lien et appliquer une pluralité d'analyses de sécurité sur ledit graphe de manière à obtenir une pluralité d'indicateurs quantitatifs pour chacun des nœuds et des liens du graphe, la pluralité d'analyses de sécurité étant sélectionnée dans un ensemble comportant : vulnérabilités des conteneurs ; politiques de sécurité des pods ; accessibilité des services des pods ; comptes de service des pods ; politiques réseaux entre pods ; et, affinités et anti-affinités entre pods;
- noter (156) chacun des nœuds et des liens du graphe en calculant un score global de vulnérabilité à partir des différents indicateurs quantitatifs ; et
- afficher (157) le graphe (G) enrichi des scores globaux de vulnérabilité sur une interface homme - machine (30) du serveur d'orchestration.

2. Procédé selon la revendication 1, dans lequel le fichier de déploiement (F_Config) est un fichier au format YAML.

3. Procédé selon la revendication 1 ou la revendication 2, comportant une étape d'analyse (151) et une étape de conversion (151) du fichier de déploiement pour obtenir un document sérialisé (D_JSON), à partir duquel est extraite la pluralité d'objets (Obj).

4. Procédé selon la revendication 3, comportant, alors que le document sérialisé comporte des paires clé-valeur, une étape d'agrégation (153) permettant d'instancier la pluralité d'objets (Obj) à partir du document sérialisé et d'une librairie d'objets généralisés.

5. Procédé selon l'une quelconque des revendications 1 à 4, comportant une étape consistant à noter chacun des nœuds, en calculant des sous-scores de dangerosité pour chaque type d'attaque de la matrice MITRE ATT&CK, et en agrégeant les sous-scores de dangerosité entre eux, la matrice MITRE ATT&CK étant une base de référence des techniques d'attaques regroupées par tactique, le graphe affiché étant enrichi des scores globaux de vulnérabilité et de dangerosité.

6. Programme d'ordinateur comportant des instructions logicielles qui, lorsqu'elles sont exécutées par un ordinateur, mettent en œuvre un procédé selon l'une quelconque des revendications 1 à 5.

7. Serveur d'orchestration d'une grappe de serveurs, propre à exécuter le programme d'ordinateur de la revendication 6 pour mettre en œuvre un procédé conforme à l'une quelconque des revendications 1 à 5.

## Patentansprüche

1. Verfahren (100), implementiert durch einen Computer, zur Sicherheitsanalyse einer Einsatzdatei (F_Config), die von einem Orchestrierungsserver (3) eines Clusters von Servern (1) interpretiert werden kann, um einen Einsatz einer Microservice-Anwendung zu realisieren, wobei die Einsatzdatei (F_Config) Container und Pods umfasst, wobei die Pods Ausführungsgruppierungen der Container sind, wobei das Verfahren
die folgenden Schritte umfasst:
- Abfragen (151, 152, 153) einer Vielzahl von Objekten (Obj) aus der Einsatzdatei, wobei jedes Objekt eine Instanz eines generischen Objekts ist und jedes generische Objekt zu einer Bibliothek von vordefinierten generischen Objekten gehört;
- Korrelieren (154) der Objekte aus der Vielzahl von Objekten miteinander, um eine Vielzahl von Objektsätzen (Ens) zu definieren, wobei jede Objektmenge mit einem Container der Einsatzdatei oder einer Laufzeitgruppierung von Containern der Einsatzdatei assoziiert ist;
- Erstellen (155) eines Graphen (G), umfassend Knoten und Links, wobei jeder Knoten einem Container der Einsatzdatei oder einer Ausführungsgruppe von Containern der Einsatzdatei entspricht und jeder Link einer Sicherheitsbeziehung zwischen den beiden durch die Verbindung verbundenen Knoten entspricht, und Anwenden einer Vielzahl von Sicherheitsanalysen auf den Graphen, um eine Vielzahl von quantitativen Indikatoren für jeden der Knoten und Verbindungen des Graphen zu erlangen, wobei die Vielzahl von Sicherheitsanalysen ausgewählt ist aus einem Satz, der Folgendes umfasst: Container-Schwachstellen; Pod-Sicherheitsrichtlinien; Zugänglichkeit von Pod-Diensten; Pod-Dienstkonten; Netzwerkrichtlinien zwischen Pods; und, Affinitäten und Anti-Affinitäten zwischen Pods;
- Bewerten (156) von jedem der Knoten und Verbindungen des Graphen, indem aus den verschiedenen quantitativen Indikatoren ein Gesamtwert für Schwachstellen berechnet wird; und
- Anzeigen (157) des angereicherten Graphen (G) der Gesamtbewertung der Schwachstellen auf einer Mensch-Maschine-Schnittstelle (30) des Orchestrierungsservers.

2. Verfahren nach Anspruch 1, wobei die Einsatzdatei (F_Config) eine Datei im Format YAML ist.

3. Verfahren nach Anspruch 1 oder Anspruch 2, umfassend einen Analyseschritt (151) und einen Umwandlungsschritt (151) der Einsatzdatei, um ein serialisiertes Dokument (D_JSON) zu erlangen, aus dem die Vielzahl von Objekten (Obj) abgefragt wird.

4. Verfahren nach Anspruch 3, das, während das serialisierte Dokument Schlüssel-Wert-Paare umfasst, einen Aggregationsschritt (153) umfasst, der es ermöglicht, die Vielzahl von Objekten (Obj) anhand des serialisierten Dokuments und einer Bibliothek von verallgemeinerten Objekten zu instanziieren.

5. Verfahren nach einem der Ansprüche 1 bis 4, umfassend einen Schritt, bei dem jeder der Knoten bewertet wird, indem für jeden Angriffstyp der MITRE ATT&CK-Matrix Gefährlichkeitsunterwerte berechnet werden und die Gefährlichkeitsunterwerte miteinander aggregiert werden, wobei die Matrix MITRE ATT&CK eine Referenzbasis für Angriffstechniken ist, die nach Taktiken gruppiert sind, wobei der angezeigte Graph mit den Gesamtwerten für Schwachstellen und Gefährlichkeit angereichert wird.

6. Computerprogramm, umfassend Softwareanweisungen, die, wenn sie von einem Computer ausgeführt werden, ein Verfahren nach einem der Ansprüche 1 bis 5 implementieren.

7. Orchestrierungsserver eines Serverclusters, der geeignet ist, um das Computerprogramm nach Anspruch 6 auszuführen, um ein Verfahren nach einem der Ansprüche 1 bis 5 zu implementieren.

## Claims

1. A computer-implemented method (100) for security analysis of a deployment file (F_Config) suitable for being interpreted by an orchestration server (3) of a cluster of servers (1) in order to carry out a deployment of a microservices application, the deployment file (F_Config) comprising containers and pods, the pods being execution groups of the containers, the method
comprising
the steps of:
- extracting (151, 152, 153) from the deployment file a plurality of objects (Obj), each object being an instance of a generic object and each generic object belonging to a library of predefined generic objects;
- correlating (154) the plurality of objects with one another, so as to define a plurality of sets of objects (Ens), each set of objects being associated with a container of the deployment file or an execution group of containers of the deployment file;
- constructing (155) a graph (G) comprising nodes and links, each node corresponding to a container of the deployment file or to an execution group of containers of the deployment file, and each link corresponding to a security relationship between the two nodes connected by the link, and applying a plurality of security analyses to said graph so as to obtain a plurality of quantitative indicators for each of the nodes and links of the graph, the plurality of security analyses being selected from a set comprising: container vulnerabilities; pod security policies; pod service accessibility; pod service accounts; inter-pod network policies; and, inter-pod affinities and anti-affinities;
- rating (156) each of the nodes and links in the graph by calculating an overall vulnerability score from the various quantitative indicators; and
- displaying (157) the graph (G) enriched with overall vulnerability scores on a human-machine interface (30) of the orchestration server.

2. The method according to claim 1, wherein the deployment file (F_Config) is a file in YAML format.

3. The method according to claim 1 or claim 2, comprising a step of analysis (151) and a step of conversion (151) of the deployment file in order to obtain a serialised document (D_JSON), from which the plurality of objects (Obj) is extracted.

4. The method according to claim 3, comprising, while the serialized document comprises key-value pairs, an aggregation step (153) making it possible to instantiate the plurality of objects (Obj) from the serialised document and from a library of generalised objects.

5. The method according to any one of claims 1 to 4, comprising a step consisting in rating each of the nodes, calculating danger sub-scores for each type of attack in the MITRE ATT&CK matrix, and aggregating the danger sub-scores with one another, the MITRE ATT&CK matrix being a reference base of attack techniques grouped by tactic, the graph displayed being enriched with the overall vulnerability and danger scores.

6. A computer program comprising software instructions which, when run by a computer, implement a method according to any of claims 1 to 5.

7. A server for orchestrating a cluster of servers, suitable for executing the computer program of claim 6 to implement a method according to any one of claims 1 to 5.
